# EUROPÄISCHE PATENTSCHRIFT

(11) **EP 3 207 538 B1**
(45) Veröffentlichungstag und Bekanntmachung des Hinweises auf die Patenterteilung: **31.05.2023**
(21) Anmeldenummer: 15778948.8
(22) Anmeldetag: 12.10.2015
(51) Int. Cl.: G08G 1/01, G08G 1/16, G01S 7/00, G01C 21/00, G01S 7/41, G01S 13/86, G01S 13/931, G01S 15/931, G01S 17/931, G06V 20/58, H04N 7/18, G01S 15/89, H04W 4/44, G08G 1/0968, G01S 13/87

(54) **KOMMUNIKATIONSVORRICHTUNG FÜR EIN FAHRZEUG UND VERFAHREN ZUM KOMMUNIZIEREN**
COMMUNICATION SYSTEM FOR A VEHICLE AND METHOD FOR COMMUNICATING
DISPOSITIF DE COMMUNICATION POUR VÉHICULE ET PROCÉDÉ DE COMMUNICATION

(30) Priorität: 13.10.2014 DE 102014220687
(43) Veröffentlichungstag der Anmeldung: 23.08.2017
(73) Patentinhaber: Continental Automotive Technologies GmbH, 30165 Hannover (DE)
(72) Erfinder: GREWE, Ralph, 65933 Frankfurt am Main (DE)
(74) Vertreter: Continental Corporation
(86) Internationale Anmeldenummer: PCT/EP2015/073592
(87) Internationale Veröffentlichungsnummer: WO 2016/059006

(56) Entgegenhaltungen:
- EP-A2- 0 921 509
- WO-A1-2013/060323
- DE-A1-102012 219 595
- US-A1- 2010 100 325
- US-A1- 2014 278 047
- US-B1- 7 167 799

## Beschreibung

Die Erfindung betrifft eine Kommunikationsvorrichtung für ein Fahrzeug, eine Verwaltungsvorrichtung und ein Verfahren zum Kommunizieren laut der respektiven Patentansprüche 1, 10 und 11.

Bei zukünftigen Fahrerassistenzsystemen und hochautomatisiertem Fahren wird davon ausgegangen, dass eine hochgenaue Karte, Landkarte oder hochgenaue Geodaten eingesetzt werden. Damit diese Karte immer aktuell ist, haben die Fahrzeuge eine permanente Verbindung zu einem sogenannten "Backend", auf dem die Karte und zugehörige Kartendaten gespeichert sind. Es findet eine Kommunikation zwischen dem Fahrzeug und dem Backend statt.

Ein gitterbasiertes Umfeldmodell für ein Fahrzeug ist aus der Druckschrift WO 2013/060323 A1 bekannt.

Die EP 0921509 A2 beschreibt ein System zum Bereitstellen einer geografischen Datenbank, wobei das System ein Aktualisierungs-Rückmeldungsprogramm umfasst. Daten, die physische Orte der Straßen identifizieren in der Datenbank und von Fahrzeugen werden miteinander verglichen. Die Daten in der Datenbank werden auf der Grundlage eines bestimmten Maßes der Signifikanz modifiziert.

Bekannt sind ferner Verfahren für die Datenkompression.

Bei einer Übertragung von Daten zwischen den Fahrzeugen und einem Backend ist mit einer hohen Datenrate zu rechnen, da die Daten insbesondere von einer Vielzahl von Fahrzeugen bereitgestellt werden. Zur Reduktion der Datenrate können bei der Übertragung Komprimierungsverfahren oder Kompressionsverfahren genutzt werden.

Es mag erwünscht sein, die Datenübertragung von Fahrzeug-Umfeldmodell-Daten, beispielsweise an ein Backend, effizienter zu gestalten.

Dementsprechend mag gemäß einem Aspekt der Erfindung eine Kommunikationsvorrichtung, ein Fahrzeug mit einer Kommunikationsvorrichtung, eine Verwaltungsvorrichtung, ein Verfahren zum Kommunizieren, ein Programmelement und ein computerlesbares Speichermedium bereitgestellt werden.

Der Gegenstand der Erfindung wird von den Merkmalen der unabhängigen Patentansprüche 1, 10 und 11 angegeben. Weitere Ausführungsformen werden von den Merkmalen der abhängigen Patentansprüchen angegeben und von der nachfolgenden Beschreibung.

Um die Kartendaten oder Referenzdaten in dem Backend aktuell zu halten, ist es möglich, die von Fahrzeugen ermittelten Umfelddaten als Datenquellen zu verwenden. Dafür müssen die erfassten Umfelddaten an das Backend übermittelt werden.

Die Umfelddaten werden von einer und/oder einer Vielzahl von Sensoreinrichtungen in einem Fahrzeug ermittelt, um beispielsweise Fahrerassistenzsysteme zu betreiben.

Gemäß einem Aspekt der Erfindung wird eine Kommunikationsvorrichtung für ein Fahrzeug beschrieben. Die Kommunikationsvorrichtung weist eine Sensoreinrichtung, eine Empfangseinrichtung, eine Verarbeitungseinrichtung und eine Übertragungseinrichtung auf. Diese Einrichtungen sind miteinander verbunden, beispielsweise mit einem fahrzeuginternen Bussystem. Die Sensoreinrichtung ist eingerichtet, Umfelddaten zu erfassen. Insbesondere ist die Sensoreinrichtung eingerichtet, die Umfelddaten bei einer Bewegung der Sensoreinrichtung zu erfassen. Zur Erfassung der Umfelddaten mag beispielsweise zyklisch eine Abfrage der Umfelddaten erfolgen, so dass zyklisch aus den Umfelddaten ein Umfeldmodell gebildet werden kann. Unterschiedliche Sensoreinrichtungen können unterschiedliche Zykluszeiten haben. Die Erfassung der Umfelddaten zu periodischen Zeitpunkten kann als Abtastvorgang der Umgebung aufgefasst werden. Unterschiedliche Sensoreinrichtungen können hierbei unterschiedliche Umfelddaten sammeln, die in einem Umfeldmodell zusammengefasst werden. Das Umfeldmodell mag zeitlichen und/oder örtlichen Änderungen unterliegen. Das Umfeldmodell einer Kommunikationsvorrichtung und/oder eines Fahrzeuges mag einen Ausschnitt aus den von der Verwaltungsvorrichtung verwalteten Referenzdaten und/oder Kartendaten darstellen. Bei dem Umfeldmodell mag es sich um eine Datenbank handeln. In anderen Worten mag ein Umfeldmodell in einer Datenbank verwaltet werden. Diese Datenbank kann fahrzeugintern geführt werden und kann die erfassten Umfelddaten der Sensoreinrichtung/Sensoreinrichtungen mit einer Zeitangabe und/oder mit einer Ortsangabe aufweisen.

Die Umfelddaten können als Objekte in dem Umfeldmodell gespeichert sein. Bei den Objekten kann es sich um erkannte Gegenstände handeln, wie beispielsweise eine Fahrbahnmarkierung, ein Verkehrszeichen oder eine Baustelle. Es kann sich bei den Objekten aber auch um lediglich Wahrscheinlichkeitswerte für einen vorhandenen Gegenstand handeln. Das Umfeldmodell kann zumindest teilweise als ein gitterbasiertes Umfeldmodell, d. h. einem Occupancy Grid, organisiert sein.

Das Umfeldmodell kann folglich eine Objektliste, wie Verkehrszeichen, Fahrzeugmarkierungen, Leitplanken oder andere Fahrzeuge und/oder ein Occupancy Grid aufweisen, beispielsweise ein Gitternetz um das Fahrzeug mit befahrbaren Flächen.

Die Empfangseinrichtung ist eingerichtet, Referenzdaten von einer externen Verwaltungsvorrichtung zu empfangen, beispielsweise Kartendaten von einem Backend und/oder von einer Roadside Unit. Die Verwaltungsvorrichtung ist extern zu der Sensoreinrichtung angeordnet. Die vom Fahrzeug empfangenen Referenzdaten werden im Fahrzeug gespeichert und dort für die genaue Ortung des Fahrzeugs in der Karte sowie für eine Fusion mit Daten des Umfeldmodells genutzt. Um die Referenzdaten in der Verwaltungsvorrichtung, beispielsweise dem Backend, zu aktualisieren, werden zudem die Umfeldmodell-Daten vor der Fusion an das Backend übermittelt. Umfeldmodell-Daten und Referenzdaten können als Arrays, Graphen oder Listen organisiert sein. Durch solche Strukturen können physikalische Speicherzellen einer Datenbank entsprechend den Umfeldmodell-Daten und/oder den Referenzdaten verkettet oder zusammengefasst werden, wodurch die Differenzbildung zwischen den Umfeldmodell-Daten und den Referenzdaten durch einen Vergleich entsprechender Inhalte der Speicherzellen möglich wird.

Die Verarbeitungseinrichtung der Kommunikationsvorrichtung ist eingerichtet, eine Differenz der erfassten Umfelddaten, d. h. im Wesentlichen der Umfeldmodell-Daten, und der entsprechenden Referenzdaten zu ermitteln. In einem Beispiel mag das Umfeldmodell, das zyklisch mit den Umfelddaten aktualisiert wird, mit den Referenzdaten verglichen werden. Um die Differenz bilden zu können, mögen die Referenzdaten entsprechend dem Umfeldmodell gitterbasiert organisiert sein. Auf diese Weise können Umfelddaten an einer Gitterstelle mit den Referenzdaten an einer entsprechenden Gitterstelle verglichen werden. Das Gitter kann als ein Bezugskoordinatensystem angesehen werden, so dass bestimmte Stellen des Umfeldmodells mit den entsprechenden Stellen der Referenzdaten verglichen werden können. Das Gitter kann an geographischen Koordinaten orientiert sein.

In diesem Zusammenhang mag sich der Begriff Differenz sowohl auf eine örtliche Differenz als auch auf eine zeitliche Differenz beziehen. Eine zeitliche Differenz mag sich ergeben, da sich die Sensoreinrichtung bewegt und somit zyklisch neue Objekte von der Sensoreinrichtung erfasst werden. Eine örtliche Differenz mag sich durch geografische Veränderungen ergeben, wie beispielsweise baulichen Veränderungen, einer veränderten Beschilderung und/oder dem Installieren einer Wanderbaustelle. Eine örtliche Differenz kann sich aber auch aus einer Messungenauigkeit einer Sensoreinrichtung ergeben.

Die Übertragungseinrichtung ist eingerichtet, die ermittelte Differenz der erfassten Umfelddaten und der entsprechenden Referenzdaten an die externe Verwaltungsvorrichtung zu übertragen. Auch die Differenz kann beispielsweise in der Struktur eines Arrays, eines Graphen und/oder einer Liste organisiert sein. Durch das Betrachten der örtlichen und/oder zeitlichen Veränderungen mag im Wesentlichen die Aktualisierung der Referenzdaten in der Verwaltungsvorrichtung erfolgen.

Gemäß einem weiteren Aspekt der vorliegenden Erfindung wird ein Fahrzeug mit der erfindungsgemäßen Kommunikationsvorrichtung beschrieben. Das Fahrzeug kann für die Bewegung der Sensoreinrichtung sorgen.

Gemäß noch einem Aspekt der Erfindung wird eine Verwaltungsvorrichtung, beispielsweise ein Backend oder eine Roadside Unit, beschrieben. Die Verwaltungsvorrichtung weist eine Karteneinrichtung und eine Sende- und Empfangseinrichtung auf, wobei die Karteneinrichtung eingerichtet ist, Kartendaten zu verwalten. Diese Kartendaten können allgemein als Referenzdaten bezeichnet werden. Die Referenzdaten sind gitterbasiert organisiert.

Die Sende- und Empfangseinrichtung ist eingerichtet, die Kartendaten als Referenzdaten an eine Kommunikationsvorrichtung für ein Fahrzeug zu senden. Ferner ist die Sende- und Empfangseinrichtung eingerichtet, eine ermittelte Differenz zwischen Umfelddaten, die von dem Fahrzeug erfasst worden sind, und den entsprechenden Referenzdaten zu verarbeiten. Darüber hinaus ist die Sende- und Empfangseinrichtung eingerichtet eine Höhe von zu übertragenden Differenzen und/oder ein Kodierverfahren an die Kommunikationsvorrichtung zur Vorgabe zu übertragen. In anderen Worten mag die Sende- und Empfangseinrichtung eingerichtet sein, auf die Kommunikationsvorrichtung Einfluss zu nehmen, insbesondere indem sie einen Schwellwert für einen Differenzwert vorgibt, über den ein ermittelter Differenzwert zu übertragen ist, und/oder es mag die Sende- und Empfangseinrichtung eingerichtet sein, das Kodier-verfahren vorzugeben, das von der Kommunikationsvorrichtung zur Übertragung genutzt wird. Zur Vorgabe kann ein momentan vorherrschender Datenverkehr berücksichtigt werden. Der Schwellwert kann beispielsweise als Quantisierungskennlinie vorgegeben werden, so dass beispielsweise nur Differenzwerte übertragen werden, die oberhalb der Quantisierungskennlinie liegen.

Gemäß einem noch anderen Aspekt der vorliegenden Erfindung wird ein Verfahren zum Kommunizieren von Umfelddaten beschrieben. Das Verfahren sieht das Bewegen eines Sensors oder einer Sensoreinrichtung zum Erfassen der Umfelddaten vor. Durch das Bewegen des Sensors mögen Änderungen der Umfelddaten erzeugt werden, die zu zeitlichen und/oder örtlichen Differenzen führen. In anderen Worten kann das Bewegen einer Sensoreinrichtung zu dem Abtasten einer Umgebung oder eines Umfeldes eines Fahrzeuges genutzt werden. Das Bewegen mag auch zu einem Eintreten und Verlassen eines Sichtbereichs der Sensoreinrichtung führen.

Das Verfahren sieht ferner das Erhalten oder Empfangen von Referenzdaten von einer externen Verwaltungsvorrichtung vor. Die Verwaltungsvorrichtung ist extern zu dem Sensor oder der Sensoreinrichtung angeordnet, so dass die Referenzdaten über eine externe Schnittstelle bereitgestellt werden.

In einem Beispiel kann es sich bei dieser Schnittstelle um eine drahtlose Schnittstelle handeln. Außerdem weist das Verfahren das Erfassen der Umfelddaten auf, wobei das Erfassen der Umfelddaten unabhängig von dem Empfangen der Referenzdaten erfolgen kann.

Zum Ermitteln einer Differenz der erfassten Umfelddaten und der entsprechenden Referenzdaten mag eine Abweichung zwischen den erfassten Umfelddaten und der entsprechenden Referenzdaten bestimmt werden. Bei dem Bestimmen der Differenz oder der Abweichung mögen Daten verglichen werden, die sich zeitlich und/oder örtlich entsprechen. Zum zeitlichen Entsprechen der Daten mag ein Zeitstempel oder ein Zeitpunkt der ermittelten Daten erfasst werden. Die örtliche Entsprechung mag über eine Koordinatenangabe hergestellt werden, beispielsweise eine Positionsangabe in einem Gitternetz, in einem Koordinatensystem und/oder in einem Occupancy Grid. Bei dieser Betrachtung mag von einer synchronen Zeitbasis und/oder einem abgeglichenen Bezugskoordinatensystem in der Kommunikationsvorrichtung und in der Verwaltungsvorrichtung ausgegangen werden. Ferner mag bei dem Vergleich der Umfelddaten und der Referenzdaten ein Zustand berücksichtigt werden, in dem sich die Umfelddaten über einen vorgebbaren Zeitraum im Wesentlichen nicht mehr ändern, beispielsweise, wenn die Umfelddaten aus dem Sichtbereich einer Sensoreinrichtung fallen.

Wenn in diesem Text der Begriff Daten als Plural verwendet wird, so mag dies auch ein einzelnes Datum einschließen. Bei den Daten kann es sich um Belegungswahrscheinlichkeiten und/oder um Objekte handeln. Ein Objekt kann aus Wahrscheinlichkeiten ermittelt worden sein. Bei einem Objekt kann es sich beispielsweise um ein Verkehrszeichen, ein Schild, ein anderes Fahrzeug, ein Infrastrukturelement oder um eine örtliche Anomalie handeln, wie beispielsweise eine Baustelle.

Nach dem Ermitteln der Differenz sieht das Verfahren das Übertragen der ermittelten Differenz der erfassten Umfelddaten und der entsprechenden Referenzdaten an die externe Verwaltungsvorrichtung vor. In anderen Worten werden im Wesentlichen nur die Abweichungen von den aktuellen Umfelddaten und den Referenzdaten übertragen.

Gemäß einem anderen Aspekt der vorliegenden Erfindung wird ein Programmelement beschrieben, das, wenn es auf einem Prozessor ausgeführt wird, den Prozessor anleitet, eines der erfindungsgemäßen Verfahren zum Kommunizieren von Umfelddaten und/oder zum Verwalten von Referenzdaten auszuführen.

Gemäß noch einem anderen Aspekt der vorliegenden Erfindung wird ein computerlesbares Medium beschrieben, auf dem ein Programmelement gespeichert ist, das, wenn es auf einem Prozessor ausgeführt wird, den Prozessor anleitet, eines der erfindungsgemäßen Verfahren zum Kommunizieren von Umfelddaten und/oder zum Verwalten von Referenzdaten auszuführen.

Ein computerlesbares Speichermedium mag eine Floppy Disk, eine Festplatte, ein USB (Universal Serial Bus)-Speichermedium, ein RAM (Random Access Memory), ein ROM (Read Only Memory) oder ein EPROM (Erasable Programmable Read Only Memory) sein. Als computerlesbares Speichermedium kann auch ein Kommunikationsnetzwerk, wie das Internet angesehen werden, welches das Aufspielen oder Herunterladen von Programmcode ermöglichen mag.

Ferner mag gemäß einem Aspekt der vorliegenden Erfindung ein Verfahren zum Verwalten von Referenzdaten beschrieben werden. Das Verfahren mag vorsehen, Kartendaten als Referenzdaten an eine Kommunikationsvorrichtung für ein Fahrzeug zu senden. Ferner mag das Verfahren vorsehen, eine ermittelte Differenz zwischen aktuell erfassten Umfelddaten und den entsprechenden Referenzdaten zu verarbeiten. Außerdem kann das Verfahren zu Steuerzwecken eine Höhe von Differenzen vorgeben, die übertragen werden soll, und/oder ein Kodierverfahren vorgeben, das für das Übertragen der Differenzdaten genutzt werden soll.

Es mag als ein Aspekt der Erfindung angesehen werden, dass Umfelddaten einer in einem Fahrzeug bewegten Sensoreinrichtung erfasst werden. Somit mögen aktuellere Umfelddaten gesammelt werden, als die vergleichbaren Referenzdaten. Beim Erfassen der Umfelddaten mag berücksichtigt werden, dass sich die Umfelddaten aufgrund der Bewegung des Fahrzeugs von einem Erfassungszyklus zu einem anderen Erfassungszyklus ändern können. Erst zu einem Zeitpunkt an dem ein Objekt nahe dem Sensor liegt, mögen sich die zugehörigen Umfelddaten nur noch unwesentlich ändern. Dieser Zeitpunkt mag einem Zeitpunkt entsprechen, zu dem die Gegenstände, die die Umfelddaten erzeugen, den Sichtbereich des Sensors verlassen. So mag ein Verkehrsschild, wenn es sich dem Sensor annähert, zyklisch Umfelddaten unterschiedlicher Entfernung zu der Sensoreinrichtung erzeugen. In einem ersten Zyklus mag das Verkehrsschild sichtbar sein und folglich Umfelddaten generieren. In einem anderen Zyklus wiederum, also beispielsweise zu einem anderen Zeitpunkt, mag das Verkehrsschild im Wesentlichen keine Umfelddaten erzeugen. Erst, wenn das Objekt oder Verkehrsschild sich nahe an der Sensoreinrichtung befindet, mag es stabile Umfelddaten erzeugen, die es ermöglichen, das Verkehrszeichen mit einer hohen Wahrscheinlichkeit zu erkennen.

Die Bestimmung, um welches Objekt es sich bei ermittelten Umfelddaten eines Gegenstands handelt, mag in einem Zyklus erfolgen, in dem die zugehörigen Umfelddaten den vorgebbaren Sichtbereich der Sensoreinrichtung verlassen und/oder bereits verlassen haben. Zeitlich vorausgehende Umfelddaten, die zu diesem Gegenstand gehören, mögen nicht berücksichtigt werden und können ausgefiltert oder verworfen werden, um die generierte Datenmenge zu reduzieren. Beispielsweise mögen Objekte, solange sie in dem Sichtbereich eines Sensors liegen, nicht in das Umfeldmodell eingetragen werden. Auch mag das Umfeldmodell in einem Beispiel einen begrenzten Umfang, Umfeld oder Umkreis um ein Fahrzeug oder um eine Sensoreinrichtung erfassen, so dass über diesen Umfang hinausgehende Daten vernachlässigbar sind. Insbesondere durch die Nicht-Berücksichtigung oder Vernachlässigung von Umfelddaten, die erfasst werden, bevor der zugehörige Gegenstand den Sichtbereich der Sensoreinrichtung verlässt, kann eine Datenreduktion oder Komprimierung erreicht werden, und eine Übertragungsbandbreite für die Übertragung der Daten kann gering gehalten werden. Der Sichtbereich der Sensoreinrichtung mag als ein Fenster und/oder Filter für Umfelddaten dienen, die nicht gespeichert und/oder nicht übertragen werden müssen, wenn die Daten eines Umfeldmodells an eine Verwaltungsvorrichtung übertragen werden.

Gemäß einem exemplarischen Ausführungsbeispiel der Erfindung werden die erfassten Umfelddaten in einem Fahrzeug-Umfeldmodell oder Umfeldmodell verwaltet. Das Fahrzeug-Umfeldmodell kann gitterbasiert, zeitbasiert und/oder koordinatenbasiert organisiert sein, wodurch Umfelddaten, die in dem Umfeldmodell gespeichert sind, auf ein Bezugskoordinatensystem bezogen werden können, um sie mit Referenzdaten vergleichen zu können.

Gemäß einem anderen exemplarischen Ausführungsbeispiel der Erfindung wird ein Sichtbereich der Sensoreinrichtung definiert, wobei zum Ermitteln der Differenz der erfassten Umfelddaten und der entsprechenden Referenzdaten die erfassten Umfelddaten genutzt werden, die bei der Bewegung der Sensoreinrichtung den Sichtbereich verlassen.

Es mag durch die Übertragung lediglich derjenigen Daten, die den Sichtbereich verlassen, möglich sein, die Anzahl der zu übertragenden Daten zu reduzieren. Folglich müssen nicht alle von der Sensoreinrichtung im Sichtbereich erfassten Daten abgespeichert und/oder übertragen werden. Außerdem mag in einem Beispiel das Umfeldmodell im Wesentlichen Umfelddaten erfassen, die im vorgebbaren Umfeld einer Sensoreinrichtung liegen.

Gemäß einem weiteren exemplarischen Ausführungsbeispiel der Erfindung ist der Sichtbereich der Sensoreinrichtung durch eine Zykluslänge abgetasteter Umfelddaten, durch einen geometrischen Erfassungsbereich, durch die Änderung der Fahrzeugposition, durch die Änderung der Fahrzeugausrichtung und/oder durch eine Änderungswahrscheinlichkeit der Umfelddaten festgelegt.

Insbesondere mag durch die Änderung der Fahrzeugposition und/oder durch die Änderung der Fahrzeugausrichtung eine Bewegung entstehen, die zu einem Verlassen eines Gegenstands des Sichtbereichs führen mag.

Da bei der Übertragung im Wesentlichen Daten berücksichtigt werden sollen, die sich nicht ändern, kann eine Zykluslänge, ein geometrischer Entfernungsbereich und/oder eine Änderungswahrscheinlichkeit oder Änderungshäufigkeit als Kriterium für die Definition des Sichtbereichs genutzt werden. Auch Daten, die sich nicht mehr ändern, da sie bereits aus einem Sichtbereich gefallen sind und die bereits übertragen worden sind, müssen nicht noch ein weiteres Mal übertagen werden. Folglich kann die Anzahl an Daten in einem Umfeldmodell weiter reduziert werden, indem im Wesentlichen nur Daten berücksichtigt werden, die sich nicht mehr ändern.

Da Umfelddaten von der Sensoreinrichtung oder von einer Vielzahl von Sensoreinrichtungen in regelmäßigen Zeitintervallen, Zyklen oder zu regelmäßigen Abtastzeiten geliefert werden, vergeht eine gewisse Zeit von dem Zeitpunkt, dass ein Objekt oder Gegenstand das erste Mal von der Sensoreinrichtung erfasst wird, bis zu dem Zeitpunkt, zu dem das Objekt oder der Gegenstand so nahe an der Sensoreinrichtung ist, dass es/er mit einer hohen Wahrscheinlichkeit erkannt werden kann. Bei dieser Annahme ist davon auszugehen, dass ein nahe bei der Sensoreinrichtung liegender Gegenstand mit einer höheren Wahrscheinlichkeit richtig erkannt wird, als ein Gegenstand, der weit von der Sensoreinrichtung entfernt ist. Fällt der Gegenstand aus dem Sichtbereich des Sensors heraus, werden keine neuen Informationen geliefert, und der bis zu diesem Zeitpunkt des Herausfallens erkannte Zustand kann übertragen werden. Dieser Zustand ist in dem Umfeldmodell abgebildet. Die Änderungswahrscheinlichkeit des Umfeldmodells ist nach dem Herausfallen eines Gegenstandes aus dem Sichtbereich eines Sensors oder einer Sensoreinrichtung am geringsten. Zum Erkennen eines Objekts aus Umfelddaten und der Zuordnung zu einem real existierenden Gegenstand mögen Verfahren der Bildverarbeitung und/oder Mustererkennung genutzt werden.

Es mag festgestellt werden, ob ein Gegenstand, der in den Sichtbereich fällt, prinzipiell von Interesse für eine Übertragung an die Verwaltungsvorrichtung ist. Hierbei mag beispielsweise auch erkannt werden, dass ein neu in das Sichtfeld der Sensoreinrichtung eintretender Gegenstand, ein anderer Verkehrsteilnehmer ist, der für die Verwaltungsvorrichtung und für die von ihr verwaltete Karte nicht interessant ist. Für diesen Gegenstand muss daher gar keine Übertragung vorgesehen werden. Der Gegenstand kann jedoch trotzdem von der Sensoreinrichtung verfolgt (tracken) werden, da er möglicherweise für das interne Umfeldmodell des Fahrzeugs von Interesse ist.

Ein baulicher Gegenstand oder ein Infrastrukturobjekt, wie beispielsweise ein Verkehrsschild, mag hingegen für die Verwaltungsvorrichtung von Interesse sein, insbesondere, wenn er sich gegenüber den Referenzdaten geändert hat. Dieser Gegenstand mag von dem ersten Erscheinen bis zur sicheren Erkennung verfolgt werden, und in dem Moment in das Umfeldmodell eingetragen und/oder an die Verwaltungsvorrichtung übertragen werden, in dem die Erkennungswahrscheinlichkeit am höchsten ist. Diese Wahrscheinlichkeit mag am höchsten sein, wenn der Gegenstand den Sichtbereich der Sensoreinrichtung verlässt. Der Sichtbereich mag durch eine Anzahl an Abtastzyklen, eine geometrische Funktion oder eine Ausleuchtungskeule der Sensoreinrichtung und/oder durch Betrachtung der Änderungshäufigkeit, beispielsweise durch Fehlerkennungen, definiert sein.

In einem vorgebbaren Filter, kann festgelegt werden, welche Objekte oder Gegenstände für die Verwaltungsvorrichtung von Interesse sind, so dass nur diese und/oder nur Umfeldmodelle, die diese enthalten, übertragen werden. Treten lange Zeit keine Infrastrukturobjekte auf, muss keine Übertragung des Umfeldmodells erfolgen. Durch eine Vorverarbeitung der Umfelddaten kann eine unnötige Übertragung von uninteressanten Objekten und/oder eine Übertragung von Umfeldmodellen mit noch nicht sicher erkannten Gegenständen vermieden werden. Durch solch eine Auswahl oder Filterung lässt sich die übertragene Datenmenge reduzieren.

Zusätzlich kann festgestellt werden, ob ein erkanntes Objekt bereits in den Referenzdaten vorhanden ist, um eine erneute Übertragung zu vermeiden. Sollte ein Verkehrsschild erkannt werden, das an der entsprechenden örtlichen Stelle bereits in den Referenzdaten vorhanden ist, so ist keine Aktualisierung der Referenzdaten in der Verwaltungsvorrichtung von Nöten. Wird jedoch beispielsweise festgestellt, dass sich der Ort des Verkehrsschildes oder allgemein des erkannten Objektes verschoben hat und/oder das Objekt noch nie vorher erkannt worden ist, so handelt es sich hierbei um eine interessante Information, die an die Verwaltungsvorrichtung übertragen werden soll. Hierbei können auch Toleranzen berücksichtigt werden, um Ungenauigkeiten der Sensoreinrichtungen auszugleichen.

Gemäß einem anderen Ausführungsbeispiel der Erfindung mag die Sensoreinrichtung zumindest eine Sensoreinrichtung sein, ausgewählt aus der Gruppe der Sensoreinrichtungen, bestehend aus einer Kamera, einem Abstandsensor, einem Radarsensor, einem ADAS (Advanced Driver Assistance System Sensor), einem Ultraschallsensor, einem LIDAR (Light detection and ranging Sensor) und einem LaDAR (Laser detection and ranging Sensor).

Gemäß einem anderen Aspekt der Erfindung können die Sensoreinrichtung, die Empfangseinrichtung, die Verarbeitungseinrichtung und/oder die Übertragungseinrichtung über einen CAN-Bus (Controller Area Network), über Flexray und/oder über Ethernet (IEEE 802.x) untereinander verbunden sein.

Bei einem CAN Bus handelt es sich um ein Standard-ÜbertragungsBus-System eines Fahrzeugs aus der Familie der Feldbusse. Bieten die entsprechenden Komponenten CAN Schnittstellen, können sie leicht durch den Anschluss an den Bus miteinander verbunden werden. Ähnliches mag für Flexray oder Ethernet gelten.

Gemäß einem anderen Aspekt der Erfindung kann die Empfangseinrichtung und/oder die Übertragungseinrichtung eine Schnittstelle aufweisen, die aus der Gruppe der Schnittstellen ausgewählt ist, bestehend aus einer Funkschnittstelle, einer Car-To-X-Schnittstelle, einer WIFI Schnittstelle, einer UMTS Schnittstelle (Universal Mobile Telecommunications System), einer GSM Schnittstelle (Global System for Mobile Communications), eine GPRS Schnittstelle (General Packet Radio Service) und/oder einer LTE (Long Term Evolution) Schnittstelle.

Eine Funkschnittstelle ermöglicht die drahtlose Kommunikation zwischen Verwaltungsvorrichtung und Kommunikationsvorrichtung. Weitere Beispiele für drahtlose Verbindungen sind Bluetooth, WLAN (z. B. WLAN 802.11a/b/g/n oder WLAN 802.11p), ZigBee oder WiMax.

Gemäß einem weiteren Ausführungsbeispiel der Erfindung weist die Übertragungseinrichtung eine Quantisiereinrichtung oder Quantisierungseinrichtung auf, wobei die Quantisiereinrichtung eingerichtet ist, die ermittelte Differenz über einer vorgebbaren Höhe zu übertragen. In einem Beispiel mag die Quantisiereinrichtung eingerichtet sein, die ermittelte Differenz, deren Wert über einer vorgebbaren Quantisierungsstufenhöhe liegt und/oder über einem vorgebbaren Quantisierungsstufenverlauf liegt. Ein Quantisierungsstufenverlauf mag bei einer nicht äquidistanten Quantisierung von Relevanz sein.

Eine Quantisierungseinrichtung führt zu einer Reduktion der Datenmenge oder Kompression, indem ein Eingangssignal auf ein Ausgangssignal mit einer gegenüber dem Eingangssignal reduzierten Anzahl Stufen abgebildet oder digitalisiert wird. Die Breite der Stufen kann dabei z. B. äquidistant oder variabel sein. Fällt der Wert einer Differenz unter eine solche Stufe mag er nicht erkannt und somit nicht berücksichtigt werden.

In Kombination mit der Quantisiereinrichtung kann die Übertragungseinrichtung eine Kodiereinrichtung aufweisen, wobei die Kodiereinrichtung eingerichtet ist, die ermittelte Differenz mit einem vorgebbaren Kodierverfahren zu kodieren.

Die Höhe der Differenzen, die übertragen werden sollen, wird von der externen Verwaltungsvorrichtung vorgegeben werden. Ebenso kann die Höhe der Änderungsraten, bei denen eine Übertragung stattfinden soll, von der Verwaltungsvorrichtung vorgegeben werden.

Die externe Verwaltungsvorrichtung kann auch Einfluss auf das einzusetzende Kodierverfahren nehmen.

Durch die unterschiedlichen Arten der Einflussnahme auf die Kommunikationsvorrichtung kann die Verwaltungsvorrichtung den Datenstrom steuern, der ihr von einer und/oder von einer Vielzahl von Kommunikationsvorrichtungen zur Verfügung gestellt wird. Auf diese Weise kann die Verwaltungsvorrichtung ein Feedback an die Kommunikationsvorrichtung geben. Das Feedback kann beispielsweise ein aktuelles Datenaufkommen berücksichtigen.

Gemäß einem weiteren Aspekt der Erfindung sind die vorgebbare Höhe, die Quantisierungsstufenhöhe, der Quantisierungsstufenverlauf, eine Quantisierungskennlinnie und/oder das vorgebbare Kodierverfahren von der externen Verwaltungsvorrichtung vorgebbar. Für diese Einflussnahme kann ein Kommunikationskanal zwischen Kommunikationsvorrichtung und Verwaltungsvorrichtung eingerichtet werden.

Gemäß einem weiteren Ausführungsbeispiel der Erfindung weist die Übertragungseinrichtung zumindest zwei Buffer auf, die umschaltbar sind.

Durch das Vorsehen von zumindest zwei Buffern oder Puffern können Umfelddaten, also Daten des Umfeldmodells, gespeichert und parallel kodiert werden. Die Buffer können als Speichereinrichtungen realisiert werden, die nach dem FIFO (First in First out) Prinzip arbeiten.

Die Referenzdaten, die von der Verwaltungsvorrichtung verwaltet werden, können Kartendaten oder geographische Daten sein, insbesondere digitale Kartendaten einer digitalen Landkarte. Unter dem Begriff "digitale Karte" oder "digitale Kartendaten" sind auch Karten für fortschrittliche Fahrerassistenzsysteme (ADAS, Advanced Driver Assistance System) zu verstehen, ohne dass eine Navigation stattfindet.

Bei dem Fahrzeug handelt es sich beispielsweise um ein Kraftfahrzeug, wie Auto, Bus oder Lastkraftwagen, oder aber auch um ein Schienenfahrzeug, ein Schiff, ein Luftfahrzeug, wie Helikopter oder Flugzeug, oder beispielsweise um ein Fahrrad.

Zur Bestimmung des Ortes der Umfelddaten können Navigationssysteme zum Einsatz kommen, die Navigationsdaten oder Lokalisierungsdaten bestimmen, wie beispielsweise Satellitendaten oder GPS-Daten. Es sei darauf hingewiesen, dass im Kontext der vorliegenden Erfindung GPS stellvertretend für sämtliche Globale Navigationssatellitensysteme (GNSS) steht, wie z. B. GPS, Galileo, GLONASS (Russland), Compass (China), IRNSS (Indien).

An dieser Stelle sei darauf hingewiesen, dass die Positionsbestimmung des Fahrzeugs auch über eine Zellpositionierung erfolgen kann. Dies bietet sich insbesondere bei der Verwendung von GSM- oder UMTS-Netzen an.

Die Car-to-Car Communication (C2C-Communication = Kraftfahrzeug-zu-Kraftfahrzeug-Kommunikation) ist ein vom Car-to-Car-Communication-Konsortium (C2C-CC), einem Zusammenschluss mehrerer Automobilhersteller, definierter Begriff. C2C-CC erarbeitet für die Fahrzeug-zu-Fahrzeug-Kommunikation und für die Kommunikation der Fahrzeuge mit Infrastruktur-Einrichtungen oder Infrastukturobjekten (Ampeln, etc.) einen offenen Industriestandard. Eine Infrastruktureinrichtung ist ein Objekt oder Gegenstand im Sinne dieses Textes.

Basis für solche Car-to-Car-Funksysteme können drahtlose Kommunikationssysteme in Form von WLANs (Wireless Local Area Networks) gemäß beispielsweise dem von der IEEE unter der Standardbezeichnung 802.11 definierten Standard sein.

C2X-Kommunikation umfasst C2C-Kommunikation (Fahrzeug-zu-Fahrzeug-Kommunikation) und Kommunikation zwischen einem Fahrzeug und einer weiteren Einrichtung, die kein Fahrzeug ist, wie beispielsweise einer Infrastruktureinrichtung (Ampel, Verkehrszeichen etc.).

Im Folgenden werden weitere Aspekte der vorliegenden Erfindung mit Verweis auf die Figuren beschrieben.
- Fig. 1: zeigt ein Kommunikationssystem zum Kommunizieren von Daten aus einem Fahrzeug-Umfeldmodell an eine Verwaltungsvorrichtung gemäß einem Aspekt der vorliegenden Erfindung.
- Fig. 2: zeigt ein Fahrzeug mit einem Blockdiagramm einer Kommunikationsvorrichtung gemäß einem Aspekt der vorliegenden Erfindung.
- Fig. 3: zeigt eine Sensoreinrichtung mit einem Sichtfeld gemäß einem Aspekt der vorliegenden Erfindung.
- Fig. 4: zeigt ein Flussdiagramm für ein Verfahren zum Kommunizieren von Umfelddaten gemäß einem exemplarischen Ausführungsbeispiel der vorliegenden Erfindung.
- Fig. 5: zeigt ein Fahrzeug mit einer Kommunikationsvorrichtung gemäß einem Aspekt der vorliegenden Erfindung.
- Fig. 6: zeigt eine Verwaltungsvorrichtung gemäß einem Aspekt der vorliegenden Erfindung.

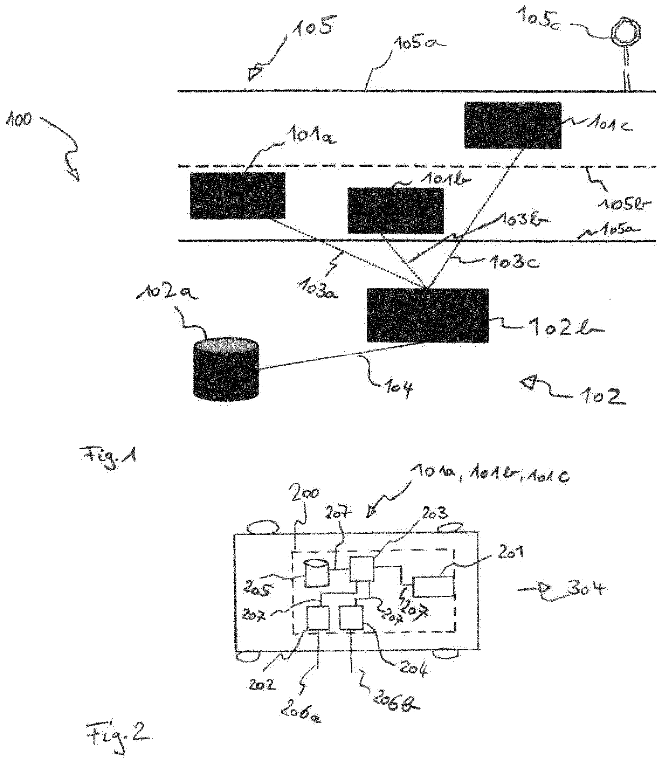

Die Darstellungen in den Figuren sind schematisch und nicht maßstäblich. In der folgenden Beschreibung der Fig. 1 bis Fig. 6 werden die gleichen Bezugszeichen für gleiche oder sich entsprechende Elemente verwendet.

Das in Fig. 1 dargestellte Kommunikationssystem 100 weist eine Vielzahl von Fahrzeugen 101a, 101b, 101c mit (nicht dargestellten) Kommunikationsvorrichtungen auf. Die Fahrzeuge kommunizieren mit einer Verwaltungsvorrichtung 102 über die drahtlosen Verbindungen 103a, 103b, 103c oder Funkverbindungen 103a, 103b, 103c. Die Verwaltungsvorrichtung 102 weist das Backend 102a und eine Roadside Unit 102b auf. Die Roadside Unit kann in einer Basisstation 102b integriert sein. Oftmals kommt auch ein Backend 102a alleine als Verwaltungsvorrichtung 102 zum Einsatz. Statt über die Kabelverbindung 104 zwischen Backend 102a und Roadside Unit 102b kommunizieren die Fahrzeuge 101a, 101b, 101c, insbesondere deren Kommunikationsvorrichtungen, direkt mit dem Backend 102a.

Mit dem in Fig. 1 dargestellten System 100 mag sich ein Datenkompressionsverfahren für eine effiziente Übermittlung von Daten aus dem Fahrzeug-Umfeldmodell der Fahrzeuge an das Backend 102a realisieren lassen.

Jedes der Vielzahl von Fahrzeuge 101a, 101b, 101c führt sein eigenes Fahrzeug-Umfeldmodell. Zur Speicherung des Fahrzeug-Umfeldmodells mag jedes der Fahrzeuge 101a, 101b, 101c eine Datenbank aufweisen. Die Fahrzeuge bewegen sich beispielsweise auf einer Straße 105 mit Infrastrukturobjekten. Die Infrastrukturobjekte 105a, 105b, 105c können eine Leitplanke 105a, eine Fahrbahnmarkierung 105b und/oder ein Verkehrsschild 105c sein.

Bei einer unkomprimierten Übermittlung der Daten aus dem Fahrzeug-Umfeldmodell können sehr große Datenmengen entstehen, die zu einem Hindernis bei der Umsetzung dieser Funktion des Austausches von Informationen führen können. Mit Kompression lässt sich eine Reduktion der Datenmenge erzielen.

In die Kommunikation zum Backend 102a sind mehrere Teilnehmer eingebunden. Ein oder mehrere Fahrzeuge 101a, 101b, 101c kommunizieren über eine Funkverbindung 103a, 103b, 103c mit einer Basisstation 102b. Diese Basisstation 102b kann eine GSM-Basisstation 102b sein oder eine Roadside Unit 102b, wie sie für C2X-Kommunikation verwendet wird. Für beide Verbindungen 103a, 103b, 103c, 104 ist eine Datenkompression anzustreben.

Ein Fahrzeug 101a, 101b, 101c, welches mit dem Backend kommuniziert, ist in Fig. 2 dargestellt. Es weist eine Kommunikationsvorrichtung 200 auf. Die Kommunikationsvorrichtung 200 weist eine Sensoreinrichtung 201, die Empfangseinrichtung 202, die Verarbeitungseinrichtung 203 oder den Prozessor 203, die Übertragungseinrichtung 204 sowie die Datenbank 205 auf. Die Empfangseinrichtung 202 und Übertragungseinrichtung 204 können in einer einzigen Sende-/Empfangseinrichtung integriert sein und dienen der drahtlosen Kommunikation über die Antennen 206a, 206b. Die einzelnen Komponenten 201, 202, 203, 204, 205 sind über einen Fahrzeugbus verbunden, beispielsweise über den CAN-Bus 207.

In der Datenbank 205 wird das Umfeldmodell des Fahrzeugs gespeichert. Da das Fahrzeug 101a, 101b, 101c beweglich ist, kann die Kommunikationsvorrichtung 200 bewegt werden. Durch die Bewegung können sich die relativen Positionen der Gegenstände 105, 105a, 105b, 105c zu den Fahrzeugen ändern, und es können zyklisch Umfelddaten mit der Sensoreinrichtung 201 erfasst und in dem Umfeldmodell in der Datenbank 205 gespeichert werden. Die erfassten Umfelddaten können mit Zeitangaben und/oder Ortsangaben gespeichert werden. Unabhängig von dem Zeitpunkt oder Zyklus der Erfassung weisen die absoluten Ortsangaben im Wesentlichen konstante Werte auf, wenn von statischen Objekten ausgegangen wird. Die relativen Ortsangaben zum Fahrzeug mögen sich jedoch ändern. Es kann sich auch die Lage des Fahrzeugs innerhalb eines Umfeldmodells ändern. Bei bewegten Objekten, wie anderen Fahrzeugen, ändern sich auch die Ortsangaben über der Zeit.

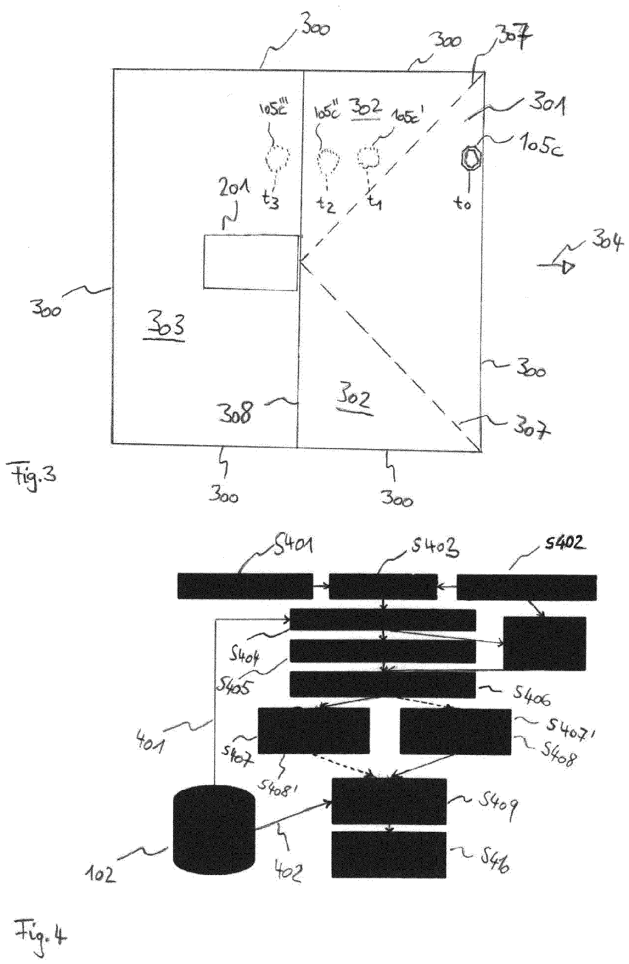

In Fig. 3 ist eine Sensoreinrichtung 201 mit einem Sensor-Sichtbereich 301 oder Sensor-Sichtfeld 301 dargestellt. Der Sichtbereich ist ein Ausschnitt aus dem Umfeldmodell 300, das sich mit der Sensoreinrichtung 201 mitbewegt. Die Sensoreinrichtung 201 oder die Fahrzeug-Sensorik 201 schaut weit in Bewegungsrichtung 304 des Fahrzeugs voraus, um dem Fahrzeug 101a, 101b, 101c (nicht gezeigt in Fig. 3) eine Reaktion auf die Umgebung zu ermöglichen. Das heißt, die Sensoreinrichtung 201 kann bereits weit entfernte Gegenstände 105c erfassen. Der Sichtbereich 301 ist der von der Sensoreinrichtung 201 erfasste Bereich eines Umgebungsmodells 300, das in Fig. 3 quadratisch dargestellt ist. Das Umfeldmodell 300 weist einen Übergangsbereich 302 auf, der außerhalb des Sichtbereichs 301 und in Bewegungsrichtung 304 der Sensoreinrichtung 201 vor der Sensoreinrichtung 201 liegt. Der Übergangsbereich 302 hat eine Form, die zwei gegenüberliegenden symmetrischen Dreiecken entspricht. Zwischen dem Übergangsbereich 302 und dem Sichtbereich 301 liegt die Grenze 307. Überschreitet ein feststehendes Objekt 105c bei einer Bewegung der Sensoreinrichtung 201 die Grenze, 307 fällt es aus dem Erfassungsbereich 301 der Sensoreinrichtung 201. Nachdem das Objekt 105c aus dem Sichtbereich 301 der Sensoreinrichtung 201 gefallen ist, ändert es das Umfeldmodell nicht mehr. Ebenso ändern Objekte, die in Bewegungsrichtung 304 hinter der Sensoreinrichtung 201 liegen, das Umfeldmodell nicht mehr. Objekte hinter der Sensoreinrichtung 201 liegen in dem Bereich 303 hinter der Sensorgrenze 308. Bei diesen Objekten im Bereich 303 handelt es sich um Objekte, die bereits einmal übertragen worden sind und daher nicht noch ein weiteres Mal übertragen werden müssen, da sie keine neuere Information liefern.

Der Erfassungsbereich 301 oder Sichtbereich 301 ist in Fig. 3 dreieckig dargestellt. Er kann aber auch parabel-, rechteck- oder trapezförmig sein bzw. sich vereinfacht durch ein Dreieck, eine Parabel oder ein Trapez oder ein Rechteck annähern lassen. Eine rechteckige Annäherung bietet sich z. B. insbesondere bei Einsatz mehrerer Sensoren mit voneinander abweichenden Sichtbereichen an.

Je nach Anzahl der Beobachtungszyklen oder Abtastzyklen ändern sich die vorausliegenden Informationen in dem Sichtbereich 301 noch stark, da bei einer geringer Anzahl von Beobachtungszyklen z. B. noch Fehldetektionen, nicht erkannte Objekte 105c und Ungenauigkeiten in den erfassten Positionen vorhanden sind.

Zur Reduktion der Datenmenge kann vorgesehen sein, dass die Übertragungseinrichtung 204 nicht in jedem Zyklus das komplette Umfeldmodell 300 überträgt, sondern nur den eingeschränkten Bereich 302 außerhalb des Sichtbereichs 301 der Sensoreinrichtung 201, in dem die Daten des Umfeldmodells gerade den Sensorsichtbereich verlassen haben. In diesem Bereich haben die Daten die maximale Sicherheit erreicht, und es treten in zukünftigen Zyklen im Wesentlichen keine Änderungen mehr auf.

Der Bereich 303, der in Bewegungsrichtung 304 hinter der Sensoreinrichtung 201 liegt, kann bei der Übertragung ebenfalls weggelassen werden, da die Daten im Wesentlichen keinen Änderungen mehr unterliegen und sie bereits in vorhergehenden Zyklen übertragen wurden. Im Bereich 303 findet kein Sensor-Update statt, da dieser Bereich von den Sensoren 201 nicht mehr erfasst wird. Dieser Bereich lässt sich ebenfalls als Dreieck, Parabel, Trapez oder Rechteck modellieren. Im Bereich 301 findet während jedem Mess-Zyklus ein Update der Daten statt, wodurch sich die Umfeldmodell-Daten stark ändern.

Insbesondere werden die Bereiche 301 bei der Speicherung und/oder Übertragung weggelassen, die nur mit wenigen Zyklen, also mit einer geringen Abtastrate, beobachtet wurden und in denen sich die Werte noch stark ändern. Es kann nämlich vorgesehen sein, dass eine Vielzahl an Sensoreinrichtungen 201 vorgesehen ist. Beispielsweise kann eine weit vor die Sensoreinrichtung 201 schauende Sensoreinrichtung mit einer hohen Zyklusdauer arbeiten, also mit einer geringen Abtastrate, während eine nahe vor die Sensoreinrichtung 201 schauende Sensoreinrichtung mit einer geringen Zyklusdauer arbeiten kann, also mit einer hohen Abtastrate. Die Daten in diesem Bereich 301 ändern sich sehr stark und haben noch nicht ihre maximale Zuverlässig erreicht und sind daher für ein Update der Backend-Daten oder Referenzdaten nur eingeschränkt geeignet oder nötig. Es wird somit angestrebt, im Wesentlichen nur die Daten mit der höchsten Erkennungswahrscheinlichkeit oder mit der geringsten Änderungswahrscheinlichkeit zu übertagen.

Die Datenrate zur Übertragung der Daten des Umfeldmodells 300 kann reduziert werden, wenn im Wesentlichen nur die Informationen oder Daten der Bereiche 302 übertragen werden, die den Sensorsichtbereich gerade verlassen haben, die folglich im Wesentlichen im Moment der Bereitstellung die Grenze 307 überschreiten oder überschritten haben. Nach der einfachen Übertragung müssen diese Daten nicht nochmals übertragen werden, da die Information dem Backend bereits vorliegt, und es kann auf eine weitere Übertragung verzichtet werden. Die weiter zurückliegenden Informationen wurden in vorausgehenden Zyklen übertragen und ändern sich daher nicht mehr. Bei diesen weiter zurückliegenden Informationen handelt es sich um Daten, die in einem vorausgehenden Zyklus erfasst worden sind. Diese Daten liegen im Wesentlichen in dem Bereich 303, wenn eine Bewegung der Sensoreinrichtung in die Bewegungsrichtung 304 zugrunde gelegt wird.

Aufgrund der Bewegung, der Sensoreinrichtung 201 und aufgrund der zyklischen Abtastung der Umfelddaten und somit aufgrund der zyklischen Erfassung der Objekte 105c ändert sich die Position des Objektes relativ zum Fahrzeug in den Daten des zyklisch aktualisierten Umfeldmodells 300 in Abhängigkeit von der Zeit. Oftmals kommt dabei eine Repräsentation des statischen Fahrzeugumfelds in Weltkoordinaten zum Einsatz, wobei die Position des Objektes im Umfeldmodell konstant bleibt, sich aber die Position des Fahrzeugs im Umfeldmodell von Zyklus zu Zyklus ändert. Das Fahrzeug bewegt sich oder "fährt" durch das Umfeldmodell.

In einem Beispiel wird das Fahrzeugumfeld in weltfesten Koordinaten repräsentiert, wobei sich der Bereich 300 dadurch ergibt, dass nur ein begrenzter Bereich um das Fahrzeug herum repräsentiert wird. Der Bereich 300 kann dann als ein Fenster aufgefasst werden. Die in Fahrtrichtung 304 liegende "vordere" Grenze des Bereichs 300 ergibt sich aus der begrenzten Sichtweite des Umfeldmodells, z. B. durch die begrenzte Sensorreichweite oder durch die abnehmende Sensorgenauigkeit. Die hintere Grenze ergibt sich dadurch, dass zu "alte" Daten gelöscht werden. Das Umfeldmodell 300 kann als eine Landkarte verstanden werden, von der immer nur der begrenzte Bereich 300 im Speicher des Fahrzeugs oder der Kommunikationsvorrichtung gehalten wird. Die Position bewegter Objekte ändert sich bei weltfester Modellierung.

Die Koordinaten der Grenzen 307, 308 zwischen den Bereichen 301, 302 und 303 innerhalb des Umfeldmodells 300 sind bei der Betrachtung des zyklisch aktualisierten Umfeldmodells 301 von der Fahrzeugposition und der Ausrichtung des Fahrzeugs abhängig und ändern sich bei bewegtem Fahrzeug abhängig von der Fahrzeugbewegung von Zyklus zu Zyklus.

Alternativ können fahrzeugbezogene Koordinaten oder sensorbezogene Koordinaten verwendet werden, wobei die Koordinaten der Grenzen 307, 308 zwischen den Bereichen 301, 302 und 303 fest bleiben, sich aber die Position statischer Objekte in Fahrzeugkoordinaten bei bewegtem Fahrzeug in jedem Zyklus ändert.

Es findet somit eine Zeit-Ortstransformation statt. So "wandert" beispielsweise das Objekt 105c zu den unterschiedlichen Abtastzeitpunkten t0, t1, t2, t3 relativ zum Fahrzeug von dem Sichtbereich 301 über die Grenze 307 in den Übergangsbereich 302 und schließlich in den rückwärtigen Bereich 300. Das Wandern des statischen Objekts 105c wird in den sensorbezogenen Koordinatensystem sichtbar, während das Objekt 105c bezogen auf ein Koordinatensystem des Umfeldmodells 300 an einem festen Ort erscheint. Das zeitlich veränderte Abbild des Objekts 105c ist zum Zeitpunkt t0 als Objekt 105c dargestellt, zum Zeitpunkt t1 als Objekt 105c`, zum Zeitpunkt t2 als Objekt 105c" und zum Zeitpunkt t3 als Objekt 105c‴. Die Übertragung findet jedoch lediglich im Zeitpunkt t1 statt, da zum Zeitpunkt t0 die Erkennungsgenauigkeit noch zu gering ist. Ab dem Zeitpunkt t2 muss keine weitere Übertragung mehr erfolgen, da der Sensor nicht mehr in der Lage ist, Änderungen des Objekts 105c zu erfassen. Die Zeit nimmt vom Zeitpunkt t0 zum Zeitpunkt t3 zu. Zu jedem Zeitpunkt wird ein gesamtes Umfeldmodell 300 erzeugt. Es werden jedoch die sich ändernden Bereiche herausgefiltert und nur die Änderungen als Differenz übertragen.

Die Differenzbildung findet in der Verarbeitungseinrichtung 203 statt.

Details zum Ablauf des Kompressionsverfahrens im Fahrzeug zeigt die Fig. 4. Hier ist ein Verfahren zum Kommunizieren von Umfelddaten in Form eines Flussdiagramms dargestellt. Während das Verfahren die Übertragung von Daten zu einer externen Verwaltungsvorrichtung 102a darstellt, kann das Verfahren auch für die fahrzeuginterne Übertragung von Occupancy Grids oder zur fahrzeuginternen Übertragung eines Umfeldmodells genutzt werden.

Da die Datenübertragung vom Fahrzeug an das Backend 102a jedoch nicht sicherheitskritisch und weniger zeitkritisch ist als ein Verfahren für die interne Fahrzeugkommunikation, lässt sich das Übertragungsverfahren bezüglich der Datenkompression unter Ausnutzung von Bufferung optimieren, beispielsweise durch Filterung und Analyse der Umfelddaten. Die externe Kommunikation kann auch mit einer geringeren Priorität als die interne Kommunikation erfolgen. Das Umfeldmodell 300 kann als Gittermodell 300 in der Datenbank 205 organisiert sein. Objekte, die nicht überfahrbar sind, können als sogenannte Occupancy-Grids ebenfalls basierend auf ein Gittermodell erscheinen. Neben den Occupancy-Grids lassen sich auch die anderen Objekte, Merkmale oder Gegenstände des statischen Umfelds übertragen, z. B. Fahrstreifenmarkierungen 105b oder Verkehrsschilder 105c. Auch das bewegte Umfeld, z. B. andere Fahrzeuge, kann erfasst werden, beispielsweise andere Fahrzeuge. Jedoch mag aufgrund der Zeitveränderung die Übertragung der bewegten Objekte nur von untergeordnetem Interesse sein. So kann eine Filterung auch das Erkennen von statischen und beweglichen Objektdaten vorsehen, um im Wesentlichen lediglich die statischen Objekte zu übertragen.

Während bei Occupancy-Grids der Objekttyp nicht bestimmt ist, setzt das Übertragen von Gegenständen oder Objekten voraus, dass eine Erkennung der Objekte stattgefunden hat, bevor sie im Umfeldmodell hinterlegt worden sind.

Da die Referenzdaten, die im Backend gespeichert sind, statisch sind, ist davon auszugehen, dass sich nur ein geringer Teil der Daten ändert. Es werden im Schritt S401 die Referenzdaten von der externen Verwaltungsvorrichtung 102 empfangen. Die Zykluszeit, mit der Referenzdaten empfangen werden, kann um ein Vielfaches größer sein, als die Zykluszeit, mit der die Sensoreinrichtung betrieben wird. Unterschiedliche Sensoreinrichtungen 201 können mit unterschiedlichen Zykluszeiten arbeiten. Die empfangenen Referenzdaten können beispielsweise in einem separaten Bereich der Datenbank 205 gespeichert werden. In einem Ausführungsbeispiel sind die Referenzdaten übereinstimmend mit den Daten im Umfeldmodell 300 und somit starr, und es bewegen sich lediglich die Grenzen 300, 307, 308 über ein statisches Umfeldmodell 300. Die Grenzen des erfassten Bereichs bewegen sich in diesem Beispiel mit dem Fahrzeug und/oder mit der Kommunikationsvorrichtung und bewegen sich über das Umfeldmodell. In diesem Beispiel mag das Umfeldmodell von dem Bereich 300 entkoppelt sein. Der Bereich 300 kann dann als ein Fenster aufgefasst werden, das sich bewegt. Im Backend wird immer mit weltfesten Koordinaten gerechnet.

In einem anderen Beispiel kann fahrzeugintern oder innerhalb der Kommunikationsvorrichtung mit fahrzeugfesten Koordinaten gearbeitet werden, d. h. mit Koordinaten, die auf das Fahrzeug bezogen sind. In diesem Fall kann fahrzeugintern anhand der Fahrzeugposition eine Transformation des Fahrzeug-Umfeldmodells in Weltkoordinaten oder der Referenzdaten in Fahrzeugkoordinaten für die Differenzbildung vorgenommen werden.

Die Referenzdaten sind im Wesentlichen lediglich mit einer Ortsmarkierung versehen, um einen Vergleichsmaßstab zu den Umfelddaten des Umfeldmodells herstellen zu können. Die entsprechenden Daten werden im Schritt S402 aus dem Umfeldmodell ausgelesen.

Im Schritt S403 findet eine Differenzbildung zwischen den vom Backend erhaltenen Daten und den Daten des Fahrzeug-Umfeldmodells statt. Im Wesentlichen handelt es sich hierbei um einen Vergleich der statischen Infrastrukturdaten, deren Bewegung innerhalb eines vorgebbaren kleinen Zeitintervalls nicht stattfindet.

Beim Bereitstellen der Daten des Umfeldmodells, insbesondere beim Auslesen der Daten des Umfeldmodells aus der Datenbank 205, mag der gerade aus dem Sichtbereich des Sensorik 201 laufende Bereich 302 des Umfeldmodells 300 verwendet werden.

Die Differenzbildung kann bei geringen Änderungen dazu führen, dass für viele Werte keine oder nur kleine Differenzen auftreten, große Abweichungen mögen selten sein. Das kann bedeuten, dass bei einem Vergleich des gitterbasierten Umfeldmodells mit den entsprechenden Stellen der Referenzdaten nur geringe Änderungen in dem Umfeldmodell gegenüber den Referenzdaten festgestellt werden, da es sich bei den erfassten Objekten meist um Infrastrukturdaten handelt, die im Wesentlichen statisch angeordnet sind.

Im Schritt S404 kann über eine Quantisierung gesteuert werden, welche Differenzen übertragen werden. Insbesondere kann im Schritt 404 die Höhe der zu übertragenden Differenzen festgelegt werden. In anderen Worten kann ein Schwellwert festgelegt werden, wobei Differenzwerte, die unterhalb des Schwellwerts liegen, nicht übertragen werden. Eine geringe Differenz mag beispielsweise auftreten, wenn ein Verkehrsschild nur als um wenige Zentimeter gegenüber den Referenzdaten versetzt erkannt wird und somit noch innerhalb eines Toleranzbereichs liegt. Auf die Quantisierung, also auf die Höhe der zu übertragenden Differenzen, kann die Verwaltungsvorrichtung 102 Einfluss nehmen und durch ein Feedback dieser Art den Datenfluss steuern. Bei hohem Datenaufkommen kann so eine Übertragung unterschiedlicher Differenzen verhindert werden.

Ein Präcodierungsverfahren fasst im Schritt S405 nach der Quantisierung Bereiche mit identischen Werten zusammen, um so eine Komprimierung durch Zusammenfassen der Daten zu erreichen.

Im Schritt S406 findet eine Bufferung statt. Diese Bufferung kann asynchron ausgestaltet sein. Da sowohl die Datenrate der Umfelddaten als auch die verfügbare Bandbreite der FunkSchnittstelle 103a, 103b, 103c, 205b zur Verwaltungsvorrichtung 102 schwanken können und die Übertragung nicht hart echtzeitfähig sein muss, kann eine Bufferung der Daten auch zur Glättung der Datenrate eingesetzt werden. In einem Beispiel können im Zusammenhang mit der Kompression zumindest zwei Buffer genutzt werden. Der erste Buffer der zumindest zwei Buffer kann im Schritt S407 mit Daten gefüllt werden, während der zweite der zumindest zwei Buffer im Schritt S408 die Daten kodiert und versendet. Die Schritte S407 und S408 können im Wesentlichen parallel durchgeführt werden. Danach, d. h. in dem nächsten Zyklus, kann die Rolle der Buffer getauscht werden, so dass im Schritt S407' der zweite nun leere Buffer mit Daten gefüllt wird, und im Schritt 5408` kann der erste Buffer die Daten kodieren oder komprimieren und versenden. Beim Füllen der Buffer werden die zu übertragenden Daten in den Buffer geschrieben und somit gespeichert.

Aus dem Schritt S408 bzw. 5408` erfolgt ein Übergang zu dem Schritt S409, in dem die Kodierung oder Enkodierung der nunmehr vorhandenen Daten aus dem Buffer durchgeführt wird. Als Kodierungsverfahren kann in dem Schritt S409 ein vorgebbares Kodierverfahren zum Einsatz kommen. Das Kodierverfahren kann von der externen Verwaltungsvorrichtung 102 vorgegeben werden. Als Kodierverfahren kann ein Entropiekodierungsverfahren wie z. B. der Hufmann-Code oder eine arithmetische Codierung in Frage kommen. Bei diesen Kodierverfahren wird die Verteilung der im Buffer enthaltenen Symbole berechnet und für häufig auftretende Symbole kurze Codes, d. h. wenige Bits, vergeben. Aufgrund der Differenzbildung ist mit einer ungleichen Werteverteilung zu rechnen. Das Ungleichgewicht kann daher kommen, dass kleine Abweichungen der Umfelddaten, also der aktuell ermittelten Daten des Umfeldmodells, gegenüber den Referenzdaten häufiger auftreten als große Abweichungen. Im Gegensatz zu einer reinen Occupancy-Grid-Komprimierung ist auch die Anwendung von Verfahren zur Phrasen-Codierung, z. B. LZW (Lempel-Ziv-Welch) oder Blocksortierung, z. B. mittels Burrows-Wheeler-Transformation, geeignet, da sich in den Daten z. B. die Informationen von mehreren Gegenständen, Infrastrukturobjekten oder Verkehrszeichen befinden können, die z. B. durch Umsortieren oder Bocksortierung gut komprimiert werden können.

Im Schritt S410 erfolgt das Versenden der Daten an die Verwaltungsvorrichtung 102.

Zur Kommunikation der externen Verwaltungsvorrichtung mit der Kommunikationsvorrichtung in den Schritten S404 und S409 kann ein Feedbackkanal 401, 402 vorgesehen sein. Die Verwaltungsvorrichtung 102, das Backend 102a oder insbesondere die Basisstation 102b kann auf mindestens zwei Arten Einfluss auf die Datenkompression nehmen. Zum einen kann es bei vielen Teilnehmern 101a, 101b, 101c und/oder bei größeren Änderungen, z. B. einer Wanderbaustelle, zu einem großen Datenverkehr auf der Funkstrecke 103a, 103b, 103c kommen. Durch Anpassen des Kompressionsverfahrens an den verschiedenen Stellen des Kompressionsverfahrens, beispielsweise durch Anpassen der Quantisierung im Schritt S404 über den Feedbackkanal 401, kann eine erhöhte Kompression von den Fahrzeugen angefordert und so das gesamte Datenaufkommen auf ein akzeptables Maß reduziert werden. Des Weiteren können von der Verwaltungsvorrichtung 102, der Basisstation 102 oder dem Backend 102 im Schritt S409 über den Feedbackkanal 402 Parameter für die Komprimierung vorgegeben werden, z. B. Parameter in Form der für die Entropiekodierung verwendeten Tabellen.

Wenn die Quantisierung, die zu einer verlustbehafteten Kompression führt, angewendet wird, kann aus den im Schritt S404 gewonnenen quantisierten Daten und den im Schritt S402 bereitgestellten Daten des Fahrzeug-Umfeldmodell in einem Schritt S411 ein Qualitätsmaß berechnet werden. Dieses Qualitätsmaß gibt an, wie stark die Qualität der Daten durch verlustbehaftete Kompression tatsächlich beeinflusst wird. Diese Information wird im Schritt S406 zusätzlich an die Buffer übergeben und an die Verwaltungsvorrichtung 102 oder den Backend-Server 102 übermittelt, damit diese Verwaltungsvorrichtung 102 entsprechend auf die reduzierte Qualität reagieren kann. Da es sich bei der Datenmenge des Qualitätsmasses verglichen mit der Datenmenge für die Umfelddaten um einen sehr geringen Wert handelt, z. B. 1 Byte pro Buffer, kann eine gemeinsame Übertragung des Qualitätsmaßes mit den Differenzen an die Verwaltungsvorrichtung erfolgen.

Bei der Kommunikation von Basisstationen 102b mit dem Backend 102a kann zusätzlich eine Kompression angewendet werden. Dabei ist davon auszugehen, dass die von den Fahrzeugen 101a, 101b, 101c an die Basisstation 102b übermittelten Daten stark korrelieren, da, wie in Fig. 1 zu sehen ist, die Fahrzeuge 101a, 101b, 101c, die sich in gleiche Fahrtrichtung bewegen, gleiche oder sich überschneidende Gegenstände wahrnehmen. Beispielsweise nehmen alle Fahrzeuge 101a, 101b, 101c, insbesondere deren Sensoreinrichtungen, die gleichen Infrastrukturobjekte, wie die gleiche Wanderbaustelle wahr. Für die Kompression werden die Umfelddaten aller Fahrzeuge 101a, 101b, 101c in der Funk-Zelle der Basisstation 102b anhand der Position zugeordnet, wofür z. B. ein zusätzlicher dritter Buffer in der Basisstation eingesetzt werden kann. Vor der Übertragung der Daten von der Basisstation 102a an das Backend 102a wird die mittlere Differenz sowie die Abweichung der einzelnen Fahrzeuge von der mittleren Differenz ermittelt. Da von einer Ungleichverteilung der Differenzen auszugehen ist, lassen sich diese durch Anwendung eines Entropiekodierungsverfahrens auf den Buffer in der Basisstation oder in der Verwaltungsvorrichtung weiter komprimieren.

Bezogen auf ein Occupancy-Grid des Umfeldmodells werden die Differenzen zwischen Zellen des Occuopancy-Grids und den Zellen des in den Referenzdaten enthaltenen Occupancy-Grids gebildet. Bei Betrachtung von Infrastrukturdaten oder Objekten in dem Umfeldmodell, wie z. B. einem Verkehrszeichen, kann die Differenz z. B. aus einer Abweichung der gemessenen Position eines Objekts zwischen Karte des Backends 102a und der Sensormessung berechnet werden. Dabei können sowohl die Objekte des Umfeldmodells als auch die Referenzdaten in Weltkoordinaten angegeben werden, z. B. im UTM System (Universal Transverse Mercator) oder im WGS84-System. Durch Differenzbildung kann statt der vollständigen Weltposition, bei der aufgrund der großen absoluten Zahlenwerte eine große Anzahl Stellen für die Angabe einer Position mit einer Genauigkeit im cm-Bereich notwendig ist, nur eine genaue Positionsdifferenz übertragen werden, bei der sich der große Absolutwert eliminiert und nur die kleine Differenz notwendig ist, die hohe Genauigkeit und entsprechend verringerte Stellenzahl aufweist.

Bei Darstellung des Umfeldmodells in Fahrzeugkoordinaten können die Positionsangaben der im Umfeldmodell enthaltenen Objekte mit Hilfe der Weltposition des Fahrzeugs in Weltkoordinaten transformiert und somit mit den Referenzdaten verglichen werden, womit sich auch wieder obiges Verfahren für die Differenzbildung zwischen Positionen anwenden lässt.

Da alle Attribute in einer Karte georeferenziert, also mit Weltkoordinaten versehen sind, kann diese Differenzbildung auf alle in der Karte vorhandenen Attribute angewendet werden. Weitere Attribute, für die eine Differenz zwischen Umfeldmodell-Wert und Wert aus der Karte gebildet werden kann, sind z. B. die Krümmung oder Krümmungsänderung von Fahrstreifenverläufen oder Fahrstreifenmarkierungen, die Breite von Fahrstreifen oder die Sicherheit der Attribute als Wahrscheinlichkeitswert. Eine Differenzbildung kann beispielsweise für eine Datenkompression auch für alle weiteren Attribute einer Karte verwendet werden, z. B. für eine Schild-ID, die die Bedeutung des Verkehrszeichens angibt, für das eine Positionsabweichung ermittelt wurde. Wenn sich für eine Vielzahl von verschiedenen Schildern eine Positionsabweichung ergibt, die Schild-ID aber gleich bleibt, ergibt sich in den zu übertragenden Daten eine Häufung der Differenz "0" anstelle der voneinander abweichenden Schild-IDs, wodurch sich mit einem Entropiekodierungsverfahren eine gute Kompression erzielen lässt. Mit einer kleinen Abweichung der Position von Kartenelementen ist aufgrund der Sensorfehler, z. B. durch Rauschen, immer zu rechnen.

Mit dem beschriebenen Verfahren lässt sich eine Kompression erzielen. Kleine Abweichungen treten häufiger auf und profitieren von der Entropiekodierung. Durch die Quantisierung lässt sich die Übertragung von Positionsabweichungen unterhalb einer Schwelle ganz verhindern.

Ähnlich ist die Situation z. B. bei Fahrstreifenmarkierungen. HHier werden Differenzen bei Position und den Krümmungsparametern berechnet, die sich mit dem oben beschriebenen Verfahren komprimieren lassen.

Das Übertragungsverfahren kann für die Reduktion der Bandbreite bei der Kommunikation zwischen einem Fahrzeug 101a, 101b, 101c und einer Verwaltungsvorrichtung, z. B. einer Basisstation 102b und/oder einem Backend 102a, genutzt werden, um die Kosten für diese Kommunikation zu reduzieren oder überhaupt erst zu ermöglichen. Das Verfahren ist auch für die Kommunikation zwischen einer Basisstation 102b und einem Backend 102a nutzbar.

Zur Erhöhung des Komprimierungsfaktors wird das Kompressionsverfahren auf die Eigenschaften der Umfelderfassung mittels einer Sensoreinrichtung 201, z. B. mittels ADAS-Sensoren, und auf die Eigenschaften der Kommunikation zwischen einem Fahrzeug, einer Basisstation und/oder einem Backend angepasst, um eine effiziente Kompression mit hoher Kompressionsrate zu erzielen. So kann eine höhere Komprimierung gegenüber einer Kommunikation ohne Kompression oder der Anwendung eines Standard- Kompressionsverfahrens erreicht werden. Auch eine Rückmeldung kann für eine gute Kompression sorgen.

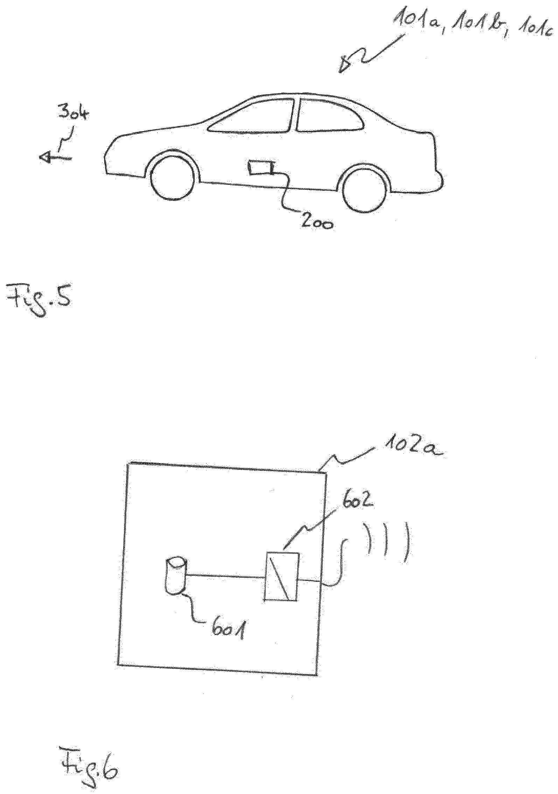

Ein Fahrzeug mit einer Kommunikationsvorrichtung ist in Fig. 5 dargestellt
Fig. 6 zeigt eine Verwaltungsvorrichtung 102a mit einer Kartenvorrichtung 601 und einer Sende- und Empfangseinrichtung 602. Die Sende- und Empfangseinrichtung 602 ist eingerichtet, Kartendaten als Referenzdaten an eine Kommunikationsvorrichtung 200 für ein Fahrzeug zu senden. Die Sende- und Empfangseinrichtung 602 ist ferner eingerichtet, eine ermittelte Differenz zwischen von dem Fahrzeug erfassten Umfelddaten und der entsprechenden Referenzdaten zu verarbeiten. Die ermittelte Differenz kann als komprimierter Datenstrom empfangen werden, wie er von einer Kommunikationsvorrichtung 200 ausgesendet worden ist. Die Sende- und Empfangseinrichtung 602 ist ferner eingerichtet eine minimale Höhe von zu übertragenden Differenzen, ein Quantisierungsverfahren, eine Quantisierungskennlinie und/oder ein Kodierverfahren an die Kommunikationsvorrichtung 200 zur Vorgabe zu übertragen, um so ein Feedback an die Kommunikationsvorrichtung 200 zu geben und die Übertragungsbandbreite zu steuern. Bei dieser Steuerung kann die Fahrzeugdichte, der an die Verwaltungsvorrichtung 102a sendenden Anzahl an Fahrzeugen berücksichtigt werden. Folglich kann die Verwaltungsvorrichtung 102 die Quantisierungsbedingungen und/oder die Kodierungsbedingungen vorgeben.

Die Verwaltungsvorrichtung kann den in Fig. 4 dargestellten Komprimiervorgang rückgängig machen und die Ausgansdaten erhalten, indem zumindest die nicht verlustbehafteten Kompressionsschritte umgekehrt werden.

## Patentansprüche

1. Kommunikationsvorrichtung (200) für ein Fahrzeug, aufweisend:
- eine Sensoreinrichtung (201);
- eine Empfangseinrichtung (206a);
- eine Verarbeitungseinrichtung (203);
- eine Übertragungseinrichtung (206b);
wobei die Sensoreinrichtung (201) eingerichtet ist, Umfelddaten bei einer Bewegung der Sensoreinrichtung zu erfassen, wobei die erfassten Umfelddaten in einem Fahrzeug-Umfeldmodell (205) verwaltet werden;
wobei die Empfangseinrichtung (206a) eingerichtet ist, Referenzdaten von einer externen Verwaltungsvorrichtung (102, 102a, 102b) zu empfangen;
wobei die Verwaltungsvorrichtung (102, 102a, 102b) extern zu der Sensoreinrichtung (201) angeordnet ist;
wobei die Verarbeitungseinrichtung (203) eingerichtet ist, um eine Differenz zwischen den erhaltenen Referenzdaten und den Daten des Fahrzeug-Umfeldmodells zu ermitteln;
wobei die Übertragungseinrichtung eingerichtet ist, die ermittelte Differenz an die externe Verwaltungsvorrichtung zu übertragen,
wobei die Übertragungseinrichtung (206b) eine Quantisiereinrichtung aufweist, wobei die Quantisiereinrichtung eingerichtet ist, die ermittelte Differenz über einem vorgebbaren Schwellwert zu übertragen,
**dadurch gekennzeichnet,**
**dass** der vorgebbare Schwellwert von der Verwaltungsvorrichtung vorgeben ist,
wobei, wenn die Quantisierung zu einer verlustbehafteten Kompression führt, ein Qualitätsmaß aus den quantisierten Daten und Daten des Fahrzeug-Umfeldmodell berechnet wird,
wobei das Qualitätsmaß angibt, wie stark die Qualität der Daten durch verlustbehaftete Kompression beeinflusst ist,
wobei das Qualitätsmaß an einen Buffer übergeben und an die Verwaltungsvorrichtung übermittelt wird.

2. Kommunikationsvorrichtung (200) nach Anspruch 1, wobei ein Sichtbereich (301) der Sensoreinrichtung definiert wird;
wobei zum Ermitteln der Differenz die erfassten Umfelddaten genutzt werden, die bei der Bewegung der Sensoreinrichtung den Sichtbereich verlassen (307).

3. Kommunikationsvorrichtung (200) nach Anspruch 2, wobei der Sichtbereich (301) der Sensoreinrichtung (201) durch eine Zykluslänge abgetasteter Sensordaten, einen geometrischen Erfassungsbereich, die Änderung der Fahrzeugposition und Fahrzeugausrichtung und/oder einer Änderungswahrscheinlichkeit der Sensordaten festgelegt wird.

4. Kommunikationsvorrichtung (200) nach einem der Ansprüche 1 bis 3, wobei die Sensoreinrichtung (201) zumindest eine Sensoreinrichtung ist, ausgewählt aus der Gruppe der Sensoreinrichtungen, bestehend aus:
- einer Kamera;
- einem Radarsensor;
- einem ADAS Sensor;
- einem Ultraschallsensor;
- einem Light detection and ranging Sensor; und
- einem Laser detection and ranging Sensor.

5. Kommunikationsvorrichtung (200) nach einem der Ansprüche 1 bis 4, wobei Empfangseinrichtung (206a) und/oder die Übertragungseinrichtung (206b) eine Schnittstelle aufweist, ausgewählt aus der Gruppe der Schnittstellen bestehend aus:
- einer Funkschnittstelle;
- einer Car-To-X-Schnittstelle;

6. Kommunikationsvorrichtung (200) nach einem der Ansprüche 1 bis 5,
wobei die Übertragungseinrichtung (206b) eine Kodiereinrichtung aufweist, wobei die Kodiereinrichtung eingerichtet ist, die ermittelte Differenz mit einem vorgebbaren Kodierverfahren zu kodieren.

7. Kommunikationsvorrichtung (200) nach Anspruch 6, wobei das vorgebbare Kodierverfahren von der externen Verwaltungsvorrichtung (102) vorgebbar ist.

8. Kommunikationsvorrichtung (200) nach einem der Ansprüche 1 bis 7, wobei die Übertragungseinrichtung zumindest zwei Buffer aufweist, die umschaltbar sind.

9. Fahrzeug (101a, 101b, 101c) mit einer Kommunikationsvorrichtung (200) nach einem der Ansprüche 1 bis 8.

10. Verwaltungsvorrichtung (102, 102a, 102b), aufweisend:
- eine Karteneinrichtung (601);
- eine Sende- und Empfangseinrichtung (602);
wobei die Karteneinrichtung (601) eingerichtet ist, Kartendaten zu verwalten;
wobei die Sende- und Empfangseinrichtung (602) eingerichtet ist, Kartendaten als Referenzdaten an eine Kommunikationsvorrichtung (200) für ein Fahrzeug zu senden;
wobei die Sende- und Empfangseinrichtung (602) ferner eingerichtet ist, eine von der Kommunikationsvorrichtung ermittelte und übertragene Differenz zwischen Daten eines Fahrzeug-Umfeldmodells und den entsprechenden Referenzdaten zu verarbeiten,
**dadurch gekennzeichnet,**
**dass** die Sende- und Empfangseinrichtung (602) ferner eingerichtet ist, einen Schwellwert von zu übertragenden Differenzen an die Kommunikationsvorrichtung (200) zur Vorgabe zu übertragen;
wobei die Verwaltungsvorrichtung ferner eingerichtet ist ein Qualitätsmaß zu empfangen, wobei das Qualitätsmaß angibt, wie stark die Qualität der Daten durch verlustbehaftete Kompression beeinflusst ist.

11. Verfahren zum Kommunizieren von Umfelddaten, aufweisend:
Bewegen einer Sensoreinrichtung (201) zum Erfassen der Umfelddaten;
Erhalten von Referenzdaten von einer externen Verwaltungsvorrichtung (S401);
wobei die Verwaltungsvorrichtung (102) extern zu der Sensoreinrichtung angeordnet ist;
Erfassen der Umfelddaten und Verwalten der erfassten Umfelddaten in einem Fahrzeug-Umfeldmodell (S402); Ermitteln einer Differenz der Daten des Fahrzeug Umfeldmodells und der entsprechenden Referenzdaten(S403);
Quantisieren durch Übertragen der ermittelten Differenz an die externe Verwaltungsvorrichtung (102) über einem vorgebbaren Schwellwert (S404),
**dadurch gekennzeichnet, dass**
der vorgebbare Schwellwert von der Verwaltungsvorrichtung (102) vorgeben ist;
wenn die Quantisierung zu einer verlustbehafteten Kompression führt, Berechnen eines Qualitätsmaßes aus den quantisierten Daten und Daten des Fahrzeug-Umfeldmodell (S411)
wobei das Qualitätsmaß angibt, wie stark die Qualität der Daten durch verlustbehaftete Kompression beeinflusst wird;
Übergeben des Qualitätsmaßes an einen Buffer (S406) und Übermitteln des Qualitätsmaßes an die Verwaltungsvorrichtung (S410).

## Claims

1. Communication apparatus (200) for a vehicle, having:
- a sensor device (201);
- a receiving device (206a);
- a processing device (203);
- a transmission device (206b);
wherein the sensor device (201) is configured to capture environmental data during a movement of the sensor device, wherein the captured environmental data are managed in a vehicle environmental model (205); wherein the receiving device (206a) is configured to receive reference data from an external management apparatus (102, 102a, 102b);
wherein the management apparatus (102, 102a, 102b) is arranged outside the sensor device (201);
wherein the processing device (203) is configured to determine a difference between the received reference data and the data from the vehicle environmental model;
wherein the transmission device is configured to transmit the determined difference to the external management apparatus,
wherein the transmission device (206b) has a quantization device, wherein the quantization device is configured to transmit the determined difference above a predefinable threshold value,
**characterized**
**in that** the predefinable threshold value is predefined by the management apparatus,
wherein, if the quantization results in lossy compression, a quality measure is calculated from the quantized data and data from the vehicle environmental model, wherein the quality measure indicates how greatly the quality of the data is influenced by lossy compression,
wherein the quality measure is transferred to a buffer and is transmitted to the management apparatus.

2. Communication apparatus (200) according to Claim 1, wherein a field of view (301) of the sensor device is defined;
wherein the captured environmental data which leave (307) the field of view during the movement of the sensor device are used to determine the difference.

3. Communication apparatus (200) according to Claim 2, wherein the field of view (301) of the sensor device (201) is defined by a cycle length of sampled sensor data, a geometrical capture region, the change in the vehicle position and vehicle orientation and/or a change probability of the sensor data.

4. Communication apparatus (200) according to one of Claims 1 to 3, wherein the sensor device (201) is at least a sensor device selected from the group of sensor devices consisting of:
- a camera;
- a radar sensor;
- an ADAS sensor;
- an ultrasonic sensor;
- a light detection and ranging sensor; and
- a laser detection and ranging sensor.

5. Communication apparatus (200) according to one of Claims 1 to 4, wherein the receiving device (206a) and/or the transmission device (206b) has/have an interface selected from the group of interfaces consisting of:
- a radio interface;
- a car-to-X interface.

6. Communication apparatus (200) according to one of Claims 1 to 5,
wherein the transmission device (206b) has a coding device, wherein the coding device is configured to code the determined difference using a predefinable coding method.

7. Communication apparatus (200) according to Claim 6, wherein the predefinable coding method can be predefined by the external management apparatus (102).

8. Communication apparatus (200) according to one of Claims 1 to 7, wherein the transmission device has at least two buffers which can be switched.

9. Vehicle (101a, 101b, 101c) having a communication apparatus (200) according to one of Claims 1 to 8.

10. Management apparatus (102, 102a, 102b) having:
- a map device (601);
- a transmitting and receiving device (602);
wherein the map device (601) is configured to manage map data;
wherein the transmitting and receiving device (602) is configured to transmit map data as reference data to a communication apparatus (200) for a vehicle;
wherein the transmitting and receiving device (602) is also configured to process a difference between data from a vehicle environmental model and the corresponding reference data, which is determined and transmitted by the communication apparatus,
**characterized**
**in that** the transmitting and receiving device (602) is also configured to transmit a threshold value of differences to be transmitted to the communication apparatus (200) for predefinition;
wherein the management apparatus is also configured to receive a quality measure, wherein the quality measure indicates how greatly the quality of the data is influenced by lossy compression.

11. Method for communicating environmental data, comprising:
moving a sensor device (201) for capturing the environmental data;
receiving reference data from an external management apparatus (S401);
wherein the management apparatus (102) is arranged outside the sensor device;
capturing the environmental data and managing the captured environmental data in a vehicle environmental model (S402);
determining a difference between the data from the vehicle environmental model and the corresponding reference data (S403);
quantizing by transmitting the determined difference to the external management apparatus (102) above a predefinable threshold value (S404),
**characterized in that**
the predefinable threshold value is predefined by the management apparatus (102);
if the quantization results in lossy compression, calculating a quality measure from the quantized data and data from the vehicle environmental model (S411),
wherein the quality measure indicates how greatly the quality of the data is influenced by lossy compression;
transferring the quality measure to a buffer (S406), and
transmitting the quality measure to the management apparatus (S410).

## Revendications

1. Arrangement de communication (200) pour un véhicule, possédant :
- un dispositif capteur (201) ;
- un dispositif de réception (206a) ;
- un dispositif de traitement (203) ;
- un dispositif de transmission (206b) ;
le dispositif capteur (201) étant conçu pour acquérir des données d'environnement lors d'un mouvement du dispositif capteur, les données d'environnement acquises étant gérées dans un modèle d'environnement de véhicule (205) ;
le dispositif de réception (206a) étant conçu pour recevoir des données de référence de la part d'un arrangement de gestion (102, 102a, 102b) externe ; l'arrangement de gestion (102, 102a, 102b) étant disposé extérieurement au dispositif capteur (201) ;
le dispositif de traitement (203) étant conçu pour déterminer une différence entre les données de référence obtenues et les données du modèle d'environnement de véhicule ;
le dispositif de transmission étant conçu pour transmettre la différence déterminée à l'arrangement de gestion externe,
le dispositif de transmission (206b) possédant un dispositif de quantification, le dispositif de quantification étant conçu pour transmettre la différence déterminée au-dessus d'une valeur de seuil pouvant être prédéfinie,
**caractérisé en ce que**
la valeur de seuil pouvant être prédéfinie est prédéfinie par l'arrangement de gestion,
lorsque la quantification donne lieu à une compression qui présente des pertes, un indice de qualité étant calculé à partir des données quantifiées et des données du modèle d'environnement de véhicule, l'indice de qualité indiquant à quel point la qualité des données est influencée par la compression qui présente des pertes, l'indice de qualité étant transféré à une mémoire tampon et communiqué à l'arrangement de gestion.

2. Arrangement de communication (200) selon la revendication 1, un champ de vision (301) du dispositif capteur étant défini ;
la détermination de la différence étant effectuée en utilisant les données d'environnement acquises qui quittent (307) le champ de vision lors du mouvement du dispositif capteur.

3. Arrangement de communication (200) selon la revendication 2, le champ de vision (301) du dispositif capteur (201) étant spécifié par une longueur de cycle des données de capteur échantillonnées, une zone d'acquisition géométrique, la modification de la position du véhicule et de l'orientation du véhicule et/ou une probabilité de modification des données de capteur.

4. Arrangement de communication (200) selon l'une des revendications 1 à 3, le dispositif capteur (201) étant au moins un dispositif capteur sélectionné du groupe de dispositifs capteurs composé de :
- une caméra ;
- un capteur radar ;
- un capteur ADAS ;
- un capteur à ultrasons ;
- un capteur de détection et de télémétrie par lumière ; et
- un capteur de détection et de télémétrie laser.

5. Arrangement de communication (200) selon l'une des revendications 1 à 4, le dispositif de réception (206a) et/ou le dispositif de transmission (206b) possédant une interface, sélectionnée du groupe des interfaces composé de :
- une interface radioélectrique ;
- une interface de véhicule à infrastructure .

6. Arrangement de communication (200) selon l'une des revendications 1 à 5,
le dispositif de transmission (206b) possédant un dispositif de codage, le dispositif de codage étant conçu pour coder la différence déterminée avec un procédé de codage pouvant être prédéfini.

7. Arrangement de communication (200) selon la revendication 6, le procédé de codage pouvant être prédéfini pouvant être prédéfini par l'arrangement de gestion (102) externe.

8. Arrangement de communication (200) selon l'une des revendications 1 à 7, le dispositif de transmission possédant au moins deux mémoires tampons qui sont permutables.

9. Véhicule (101a, 101b, 101c) comprenant un arrangement de communication (200) selon l'une des revendications 1 à 8.

10. Arrangement de gestion (102, 102a, 102b) possédant :
- un dispositif cartographique (601) ;
- un dispositif émetteur-récepteur (602) ;
le dispositif cartographique (601) étant conçu pour gérer des données cartographiques ;
le dispositif émetteur-récepteur (602) étant conçu pour envoyer les données cartographiques en tant que données de référence à un arrangement de communication (200) pour un véhicule ;
le dispositif émetteur-récepteur (602) étant en outre conçu pour traiter une différence déterminée et transmise par l'arrangement de communication entre les données d'un modèle d'environnement de véhicule et les données de référence correspondantes,
**caractérisé en ce que**
le dispositif émetteur-récepteur (602) est en outre conçu pour transmettre pour consigne une valeur de seuil des différences à transmettre à l'arrangement de communication (200) ;
l'arrangement de gestion étant en outre conçu pour recevoir un indice de qualité, l'indice de qualité indiquant à quel point la qualité des données est influencée par la compression qui présente des pertes.

11. Procédé de communication de données d'environnement, comprenant :
déplacement d'un dispositif capteur (201) en vue d'acquérir les données d'environnement ;
obtention de données de référence de la part d'un arrangement de gestion externe (S401) ;
l'arrangement de gestion (102) étant disposé extérieurement au dispositif capteur ;
acquisition des données d'environnement et gestion des données d'environnement acquises dans un modèle d'environnement de véhicule (S402) ;
détermination d'une différence des données du modèle d'environnement de véhicule et des données de référence correspondantes (S403) ;
quantification par transmission de la différence déterminée à l'arrangement de gestion (102) externe au-dessus d'une valeur de seuil pouvant être prédéfinie (S404),
**caractérisé en ce que**
la valeur de seuil pouvant être prédéfinie est prédéfinie par l'arrangement de gestion (102) ;
lorsque la quantification donne lieu à une compression qui présente des pertes, calcul d'un indice de qualité à partir des données quantifiées et des données du modèle d'environnement de véhicule (S411),
l'indice de qualité indiquant à quel point la qualité des données est influencée par la compression qui présente des pertes ;
transfert de l'indice de qualité à une mémoire tampon (S406) et communication de l'indice de qualité à l'arrangement de gestion (S410).
